# EUROPÄISCHE PATENTSCHRIFT

(11) **EP 2 316 611 B1**
(45) Veröffentlichungstag und Bekanntmachung des Hinweises auf die Patenterteilung: **11.07.2012**
(21) Anmeldenummer: 10189770.0
(22) Anmeldetag: 03.11.2010
(51) Int. Cl.: B23Q 7/00, B23Q 7/10

(54) **Ladevorrichtung für Werkstoffstangen**
Loading device for material rods
Dispositif de chargement de tiges de matière active

(30) Priorität: 03.11.2009 DE 102009052336
(43) Veröffentlichungstag der Anmeldung: 04.05.2011
(73) Patentinhaber: Kurt Breuning Irco-Maschinenbau Gmbh, 71144 Steinenbronn (DE)
(72) Erfinder: Breuning, Roland, 71144, Steinenbronn (DE)
(74) Vertreter: Witte, Weller & Partner

(56) Entgegenhaltungen:
- EP-A2- 0 311 845
- CH-A5- 659 603
- DE-A1- 1 556 220
- US-A- 5 931 287

## Beschreibung

Die vorliegende Erfindung betrifft eine Vorrichtung zum Zuführen von Werkstoffstangen zu einer Werkzeugmaschine, mit einem Magazin für die Werkstoffstangen, mit einer Führung für die Werkstoffstangen und mit zumindest einem Einleger zum Überbringen und Einlegen einer Werkstoffstange aus dem Magazin in die Führung, wobei die Führung zumindest ein Paar voneinander beabstandeten, von einem Boden hochstehenden Begrenzern aufweist, zwischen die die Werkstoffstange auf den Boden legbar ist.

Eine derartige Vorrichtung ist aus der CH 659 603 A5 bekannt.

Diese Vorrichtung dient zum Zuführen von Werkstoffstangen mit rundem Querschnittsprofil. Die Führung besteht aus einem stationären Teil, in dem ein im Querschnitt halbkreisförmiger Führungskanal ausgespart ist, der dem Kreisprofil der zuzuführenden Werkstoffstange entspricht. An dem stationären Teil ist ein hochschwenkbarer Deckel montiert, in dem ebenfalls ein im Querschnitt halbkreisförmiger Führungskanal ausgespart ist. Wird der Deckel abgeklappt, kommt er so auf dem unteren stationären Teil zum Liegen, dass die beiden ausgesparten im Querschnitt halbkreisförmigen Führungskanäle einen geschlossenen kreisförmigen Führungskanal ausbilden.

Zum Einbringen einer Werkstoffstange aus einem Magazin mittels eines Einlegers, wird der Deckel angehoben. Die Werkstoffstange wird in den oben offenen halbkreisförmigen Führungskanal im stationären Teil von oben eingelegt. Die beiden hochstehenden Flanken dieses Führungskanals dienen als Begrenzer zwischen denen die Werkstoffstange legbar ist. Da mit dieser Vorrichtung nur eine Werkstoffstange zuführbar ist, deren Außendurchmesser exakt dem Innendurchmesser des Führungskanales entspricht, liegt eine zugeführte Werkstoffstange über einen halben Umfangskreis in dem Führungskanal bzw. dessen Boden im unteren stationären Teil. Danach wird der Deckel geschlossen, so dass dann die Werkstoffstange vollumfänglich durch die Führung umfasst ist.

Bei diesen Vorrichtungen geht es darum, Werkstoffstangen mit einem kreisförmigen Querschnittsprofil einer Werkzeugmaschine, d.h. z.B. einer Drehmaschine, nacheinander zuzuführen. In dieser Werkzeugmaschine werden diese Werkstoffstangen dann weiterbearbeitet und dabei einzelne bestimmte Bauteile aus diesen Werkstoffstangen gefertigt.

Dazu sind die Werkstoffstangen gesammelt in einem Magazin vorhanden, aus dem sie durch den Einleger in eine Führung befördert werden. Diese Führung sorgt dann für die korrekte Ausrichtung der Werkstoffstange im Hinblick auf ihre Mittellängsachse bezüglich der Werkzeugmaschine. Hierzu bedarf es einer Anpassung in einer Richtung senkrecht und quer zu der Zuführrichtung der Werkstoffstange aus dem Magazin in die Führung. Eine exakte Ausrichtung ist hierbei sehr wichtig, da die Werkstoffstangen in der Werkzeugmaschine oftmals in schnelle Rotation versetzt werden. Liegt die Rotationsachse nicht exakt auf der zentralen Mittellängsachse, führt dies zu Unwuchten und in der Folge zu erheblichen Schäden.

Daneben sind im Stand der Technik auch Vorrichtungen bekannt, die Werkstoffstangen in einer Führung mit einem V-förmigen Querschnittsprofil aufnehmen können und somit zumindest eine Ausrichtung entlang der Zuführrichtung der Werkstoffstangen erreichen, sofern diese ein kreisrundes Querschnittsprofil haben. Bei anderen Querschnittsgeometrien sind asymmetrische, insbesondere verkippte Lagen in dem V-förmigen Ausschnitt der Führung möglich.

Bei der Verwendung solcher Maschinen hat sich jedoch gezeigt, dass durch die bekannten Führungen solcher Vorrichtungen keine optimale Ausrichtung von Werkstoffstangen mit beliebigen, insbesondere nicht runden, Querschnittsprofilen möglich ist.

So stellen z.B. Werkstoffstangen mit vier- oder sechseckigen Querschnittsprofilen, die neben den kreisrunden Profilen ebenfalls häufig verwendet werden, dahingehend Probleme in den zuvor genannten Vorrichtungen dar, dass die Vorrichtungen nicht geeignet sind, an diese nicht kreisrunden Querschnittsprofile angepasst zu werden. Eine korrekte Ausrichtung der Werkstoffstangen mit ihrer zentralen Mittellängsachse in Bezug auf die Werkzeugmaschine, ist somit schwer oder gar nicht möglich.

Der vorliegenden Erfindung liegt daher die Aufgabe zugrunde, eine Führung für eine solche Vorrichtung bereitzustellen, die es gestattet, Werkstoffstangen mit von der Kreisgeometrie abweichenden Querschnittsprofilen in ein und derselben Vorrichtung verwenden und zu einer Werkzeugmaschine exakt ausgerichtet zuführen zu können.

Erfindungsgemäß wird diese Aufgabe dadurch gelöst, dass ein in Zuführrichtung der Werkstoffstange gesehen hinterer, zweiter Begrenzer des Paares, zumindest während des Überbringens der Werkstoffstange höher als der erste Begrenzer des Paares ist, dass die Werkstoffstange über den ersten, niedereren Begrenzer hinweg zwischen die beiden Begrenzer des Paares bringbar ist, und dass ein Abstand zwischen dem ersten und dem zweiten Begrenzer des Paares synchron in einer Richtung, quer zur Zuführrichtung gesehen, derart veränderbar ist, dass die Begrenzer an zwei gegenüberliegenden Außenstellen der Werkstoffstange anlegbar sind und diese dabei in eine stabile Drehstellung ausrichten, und zwar derart, dass die Werkstoffstangen jeweils längs einer Mittellängslinie der Führung ausrichtbar sind.

Mit dem Begriff "Zuführrichtung" ist hier und im Folgenden immer die Richtung gemeint, in der die Werkstoffstangen aus dem Magazin in die Führung gelangen. Meist verläuft die Zuführrichtung quer zur Längsachse der Werkstoffstange.

Die Ausgestaltung der Vorrichtung mit einem Paar von hochstehenden Begrenzern, die erfindungsgemäß zueinander im Abstand veränderbar sind, gestattet eine Anpassung der Führung an individuelle Breiten und auch Formen des Querschnitts, insbesondere auch an nicht runde Formen des Querschnitts, der Werkstoffstangen. Hierzu wird eine entsprechende Werkstoffstange über den ersten, kürzeren Begrenzer hinweg gebracht. Dabei ist die unterschiedliche Länge, also die größere Höhe des hinteren, zweiten Begrenzers, dahingehend von Vorteil, dass ein Überspringen oder Überrollen über die Führung hinweg durch die Werkstoffstange vermieden wird, da der zweite Begrenzer die weitere Bewegung entlang der Zuführrichtung blockiert.

Die synchrone Veränderbarkeit der Begrenzer in ihrem Abstand quer zur Zuführrichtung gesehen hat ferner den Vorteil, dass die Werkstoffstange auf dem Boden korrekt und exakt durch die Begrenzer für die Zuführung ausgerichtet wird. Die Begrenzer legen sich an zwei gegenüberliegende Außenstellen der Werkstoffstange an und richten diese dabei in eine stabile Drehstellung aus. Eine Werkstoffstange, die z.B. einen tropfen- oder eiförmigen Querschnitt aufweist, liegt mehr oder weniger geneigt auf einem Boden. Durch beidseitiges Heranfahren der Begrenzer kann entweder eine solche Lage stabilisiert oder, falls gewünscht, in eine andere Lage verdreht werden.

In einer weiteren Ausgestaltung der Erfindung ist der erste Begrenzer des Paars in Bezug auf das Magazin gesehen absenkbar.

Diese Ausgestaltung ermöglicht es, dass eine Werkstoffstange auf den Boden zwischen dem ersten und zweiten Begrenzer gebracht werden kann, indem die Barriere, die der erste, kürzere Begrenzer darstellt, kurzzeitig durch dessen Absenken beseitigt wird. Dies stellt eine einfache Möglichkeit dar, die Werkstoffstange zwischen die beiden Begrenzer zu befördern, da hierbei lediglich ein weiterer Vorschub entlang der Zuführrichtung der Werkstoffstange benötigt wird.

In einer weiteren Ausgestaltung der Erfindung ist der zumindest eine Einleger, in Bezug auf das Magazin gesehen, anhebbar.

Diese Ausgestaltungsform ist dahingehend von Vorteil, dass die Begrenzer dabei nicht zwingend in ihrer Position verändert werden müssen, insbesondere nicht abgesenkt werden müssen, und der Einleger durch Anheben einer Werkstoffstange zum einen diese aus dem Magazin von Werkstoffstangen aussondert, ein weiteres Nachrutschen von anderen Werkstoffstangen in die Führung verhindert und somit zwei Aufgaben durch eine Bewegung bzw. einen Antrieb ausführen kann. Dies minimiert entsprechend den nötigen konstruktiven Aufwand.

In einer weiteren Ausgestaltung der Erfindung ist der Boden in seiner Höhe gegenüber dem Magazin veränderbar angeordnet.

Die Veränderbarkeit des Bodens in seiner Höhe hat den Vorteil, dass dadurch eine zusätzliche Anpassung der Ausrichtung der Werkstoffstange, nachdem sie in der Führung auf dem Boden eingelegt ist, in einer Richtung quer zur Zuführrichtung erfolgen kann. Dies ermöglicht im Hinblick auf die Ausrichtung der Werkstoffstange in Bezug auf die Werkzeugmaschine auch hierfür eine einfache und konstruktiv elegante Lösung.

Ein Verändern der beiden Begrenzer eines Paars in synchroner Weise führt dann dazu, dass die Werkstoffstange mit ihrer Mittellängsachse entlang der Zuführrichtung automatisch mit dem Zentrum der Aufnahme der Werkzeugmaschine in dieser Richtung übereinstimmt. Gegebenenfalls nötige Berechnungen und separate Ansteuerungen bezüglich unterschiedlicher Positionierungen der einzelnen Begrenzer eines Paars entfallen somit, da von vornherein die Veränderung der Abstände in Richtung quer zur Zuführrichtung konstruktiv bedingt immer zu einer korrekten Ausrichtung der Werkstoffstange in dieser Richtung führt.

In einer weiteren Ausgestaltung der Erfindung sind die Begrenzer senkrecht auf einer Grundebene des Bodens angeordnet.

Dies hat den Vorteil, dass die Begrenzer somit immer die in Zuführrichtung äußeren Kanten der Werkstoffstange berühren und mit diesen in Wechselwirkung treten, wenn es darum geht, die Werkstoffstange auf dem Boden in Zuführrichtung für das Zuführen in die Werkzeugmaschine auszurichten. Unterschiedliche Querschnittsprofile der Werkstoffstange müssen somit nicht extra berücksichtigt werden, wie es z.B. bei einer V-förmigen Anordnung der Begrenzer der Fall wäre, wenn man z.B. Werkstoffstangen mit einem Sechskantprofil oder einem Tropfenprofil verwenden würde.

In einer weiteren Ausgestaltung der Erfindung sind die Begrenzer in Form von Bolzen ausgebildet.

Dies hat den Vorteil, dass Bolzen zum einen einfache und stabile Elemente sind, die in diesem Fall das konstruktive Minimum für die Begrenzer darstellen, um eine verlässliche Ausrichtung der Werkstoffstange auf dem Boden zu erreichen. Aufgrund ihrer runden Form wird ferner die Kontaktfläche zwischen den Begrenzern mit der Werkstoffstange in der Führung auf ein Minimum reduziert, was somit unnötige Reibung beim Einführen der Werkstoffstange in die Werkzeugmaschine entlang der Führung vermeidet.

In einer weiteren Ausgestaltung der Erfindung weist die Führung zumindest zwei erste und zumindest zwei zweite voneinander axial beabstandete Begrenzer auf.

Dies hat den Vorteil, dass die Werkstoffstange an zumindest zwei axial unterschiedliche Stellen entlang ihrer Längsrichtung in Richtung der Zuführrichtung ausgerichtet und fixiert ist. Dies gestattet einen gleichmäßigeren, geraden Vorschub der Werkstoffstange entlang der Führung in die Werkzeugmaschine. Dies ist insbesondere der Fall, wenn noch mehr als zwei solcher Begrenzerpaare verwendet werden.

In einer weiteren Ausgestaltung weist der Boden zumindest zwei Bodenelemente auf, die jeweils einen ersten und einen zweiten Begrenzer aufweisen und wobei die Bodenelemente um deren mittige Hochachsen drehbar sind.

Diese Maßnahme hat den Vorteil, dass durch Drehen der Bodenelemente um deren Mittelachse synchron der Abstand zwischen dem ersten und dem zweiten Begrenzer, quer zur Längsachse der Führung gesehen, verändert wird.

Je nach Maß der Drehung legen sich die Begrenzer an mehr oder weniger axial beabstandeten Stellen an die Außenseite der Werkstoffstange an. Der Begriff Abstand bedeutet also hier nicht die direkte Verbindungslinie zwischen den Begrenzern, sondern der Abstand senkrecht zur Mittellängsachse der Werkstoffstange gesehen.

In einer weiteren Ausgestaltung der Erfindung ist das Bodenelement als kreisförmige Scheibe ausgebildet, von der ein Begrenzerpaar hochsteht.

Diese Ausgestaltung hat den Vorteil, dass zum einen der Boden in einzelne Elemente, hier Scheiben, unterteilt ist. Durch die Anordnung des zumindest einen Begrenzerpaars auf dieser drehbaren Scheibe ergibt sich ferner der Vorteil, dass diese Begrenzer somit keinen separaten Antrieb für eine Veränderung ihres Abstands in Richtung quer zur Zuführrichtung gesehen benötigen, sondern dies durch eine Drehbewegung der Scheibe, also einen gemeinsamen Antrieb, erreicht werden kann. Diese Veränderung des Abstands in Richtung quer zur Zuführrichtung gesehen ist somit konstruktionsbedingt von sich aus synchron. Außerdem wird nur ein einfacher Antrieb, insbesondere ein Drehantrieb, für die Abstandsveränderung zwischen dem ersten und zweiten Begrenzer eines Paars benötigt.

Dabei liegen erster und zweiter Begrenzer diametral gegenüberliegend auf einem gemeinsamen Bodenelement.

Sind die Begrenzer noch um deren Hochachsen drehbar, so ist eine besonders reibungsarme Vorschubbewegung der Werkstoffstangen sichergestellt.

In einer weiteren Ausgestaltung der Erfindung weist die Vorrichtung zumindest zwei Einleger auf, die jeweils zwischen zwei Bodenelementen angeordnet sind.

Diese Ausgestaltung hat den Vorteil, dass man die Einleger ebenfalls als einzelne axial verteilte Elemente ausgestalten kann, die durch diese Ausgestaltung zum einen gleichmäßig über die gesamte Länge der Werkstoffstange verteilt werden können und zum anderen aber auch beim Vorschub der Werkstoffstange in die Werkzeugmaschine mit der Werkstoffstange separat außer Kontakt gebracht werden können, so dass hier keine Reibung durch die Einleger vorliegt und die Gesamtreibung für diesen Schritt vermindert wird.

In einer weiteren Ausgestaltung der Erfindung sind die mehreren Bodenelemente synchron drehbar gelagert.

Dies hat den Vorteil, dass es für eine exakte, gerade Ausrichtung der Werkstoffstange nicht notwendig ist, die Bodenelemente bzw. die Scheiben in regelmäßigen zeitlichen Abständen immer zueinander zu kalibrieren und zueinander auszurichten, um einen geraden Vorschub der Werkstoffstange in die Werkzeugmaschine entlang der Führung zu erhalten. Dies wird hier durch diese konstruktive Ausgestaltung automatisch ermöglicht. Außerdem wird somit wieder die Zahl der Antriebe verringert, da lediglich ein einziger Antrieb zum Verdrehen der Bodenelemente benötigt wird. Dementsprechend kann auch durch nur einen Antrieb der Abstand aller ersten Begrenzer zu den entsprechenden zweiten Begrenzern synchron verändert werden. Dadurch ist die Abstandsveränderung zwischen den Begrenzern eines Begrenzerpaars in der gesamten Führung gleichmäßig und sehr genau und ferner der konstruktive Aufwand auf ein Minimum reduziert.

Ein weiterer Aspekt der vorliegenden Erfindung ist das Verfahren zum Zuführen von Werkstoffstangen zu einer Werkzeugmaschine entsprechend den vorhergehenden Ausführungen, mit folgenden Schritten:
Aussondern einer Werkstoffstange aus einem Magazin durch den Einleger,
Überbringen der Werkstoffstange über den ersten Begrenzer hinweg zwischen die beiden Begrenzer des Paars und
Verändern des Abstands zwischen dem ersten und zweiten Begrenzer eines Paars in einer Richtung quer zur Zuführrichtung gesehen, bis diese an den Außenseiten der Werkstoffstange anliegen und diese durch weiteres Zusammenfassen ggf. weiter in das Zentrum der Führung ausrichten.

Dieses Verfahren ist dahingehend vorteilhaft, dass eine Ausrichtung der Werkstoffstange in Richtung der Zuführrichtung nicht, wie aus dem Stand der Technik entsprechend den zuvor gemachten Ausführungen bekannt, durch konstruktive Gegebenheiten vorgegeben ist, sondern entsprechend der Form und des Querschnittsprofils der Werkstoffstange durch die im Abstand veränderbaren Begrenzer eines Begrenzerpaars angepasst werden kann. Dabei sind besonders vorteilhaft die Begrenzer synchron und insbesondere gleichzeitig mittels eines Antriebs zu bewegen.

Vorteilhafterweise beinhaltet das Verfahren ein Absenken des zumindest einen ersten Begrenzers.

Dadurch kann die Werkstoffstange über den abgesenkten Begrenzer in die Führung bzw. auf deren Boden gebracht werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine erfindungsgemäße Vorrichtung in einer schnittweisen Seitenansicht,
- Fig. 2: eine ausschnittsweise perspektivische Darstellung eines Magazins und einer Führung der Vorrichtung aus Fig. 1,
- Fig. 3: eine ausschnittsweise perspektivische Detailansicht der Führung entsprechend Fig. 2,
- Fig. 4: eine Draufsicht auf die Führung entsprechend der Fig. 2 und 3,
- Fig. 5-9: ausschnittsweise teilweise geschnittene Seitendarstellungen des Magazins und der Führung entsprechend der Fig. 2 bis 4 in jeweils unterschiedlichen Positionen entsprechend einem erfindungsgemäßen Verfahrensablauf,
- Fig. 10: eine ausschnittsweise perspektivische Ansicht entsprechend Fig. 2 mit einer Werkstoffstange, ausgerichtet zum Zuführen in eine Werkzeugmaschine, und einer weiteren Werkstoffstange im Magazin,
- Fig. 11A und 11B: einen Querschnitt durch die Führung mit einer Werkstoffstange mit tropfen- bzw. eiförmigem Querschnittsprofil und deren Ausrichtung,
- Fig. 12A und 12B: einen Querschnitt durch die Führung mit einer Werkstoffstange mit sechseckigem Querschnittsprofil und deren Ausrichtung, und
- Fig. 13A und 13B: einen Querschnitt durch die Führung mit einer Werkstoffstange mit rechteckigem Querschnittsprofil und deren Ausrichtung.

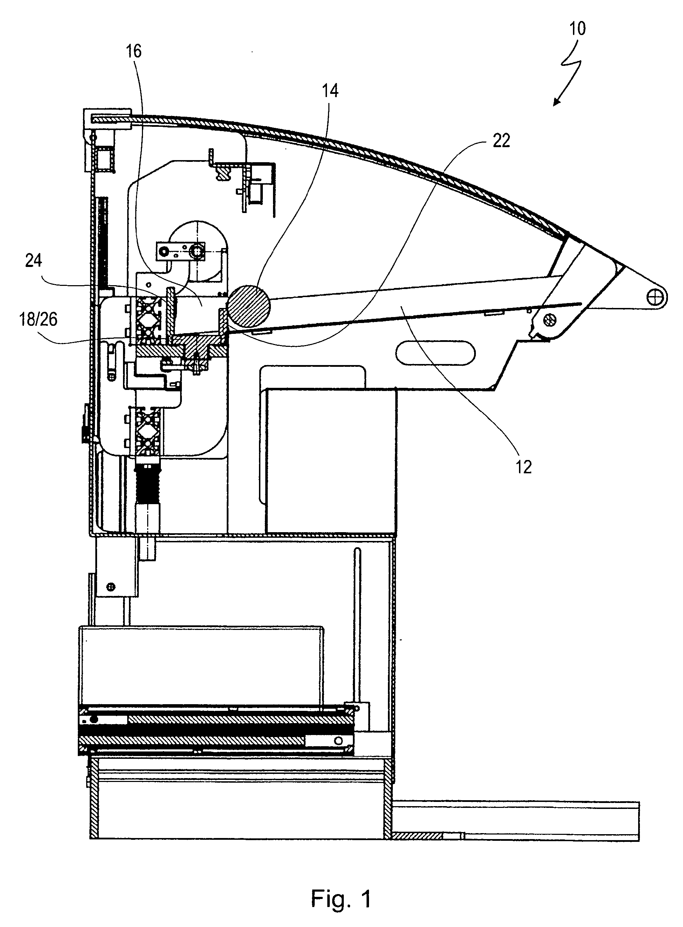

Eine in der Fig. 1 dargestellte erfindungsgemäße Vorrichtung ist in ihrer Gesamtheit mit der Bezugsziffer 10 bezeichnet.

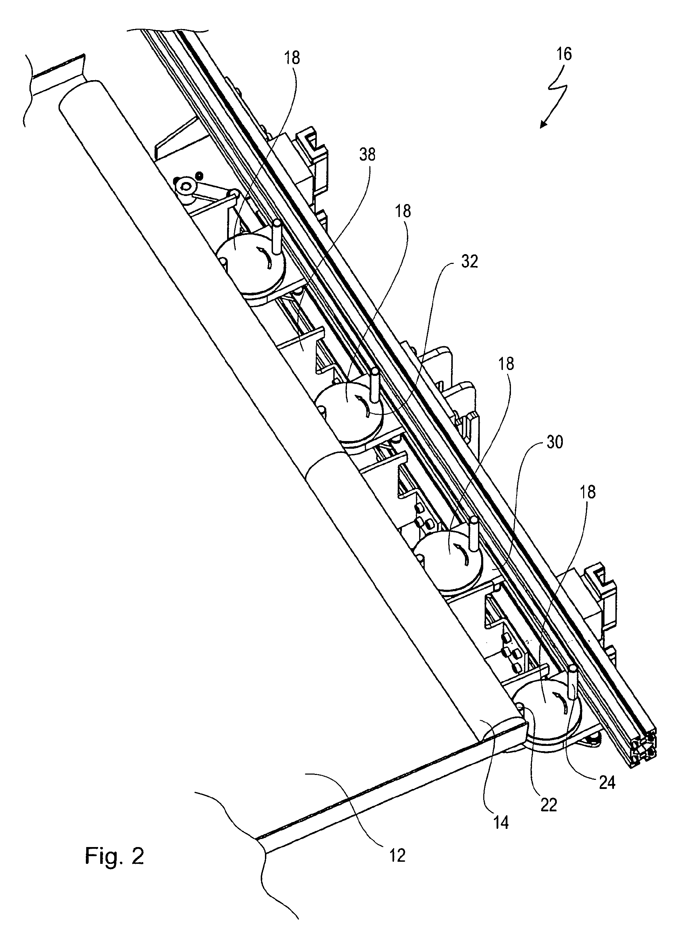

Die Vorrichtung 10 weist ein Magazin 12 für Werkstoffstangen 14 sowie eine Führung 16 für diese Werkstoffstangen auf. Dies ist insbesondere in Fig. 1 und 2 zu sehen.

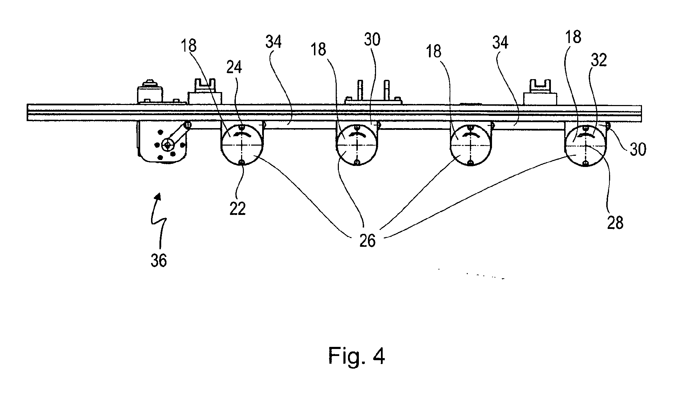

Im Zusammenhang mit den Ansichten der Fig. 2, 3 und 4 ist ferner im Detail zu sehen, dass die Führung 16 ihrerseits so angeordnet ist, dass sie am Magazin 12 anliegt.

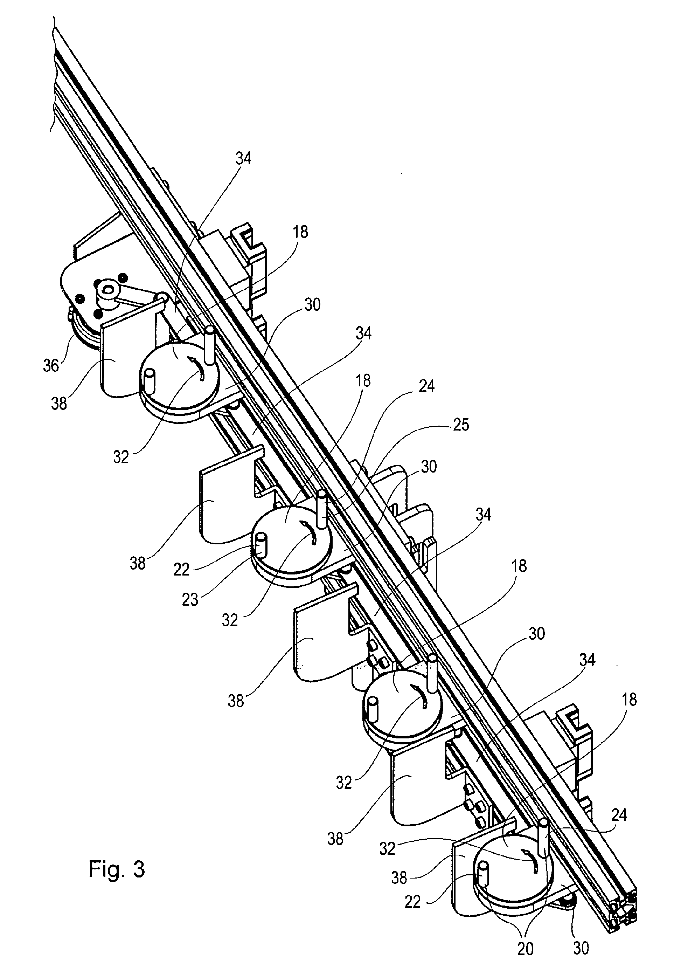

Die Führung 16 weist in dem hier gezeigten Ausführungsbeispiel vier Scheiben 18 auf. Diese Scheiben 18 weisen jeweils ein Paar 20 von Begrenzern 22 und 24 auf. Hierbei ist insbesondere der Fig. 3 gut zu entnehmen, dass der erste Begrenzer 22 mit geringer Höhe ausgestaltet ist als der zweite Begrenzer 24. Ferner ist zu sehen, dass die Begrenzer 22 und 24 in diesem Ausführungsbeispiel die Form von Bolzen 23 und 25 aufweisen.

Die Begrenzer 22, 24 sind jeweils auf einer Scheibe 18 diametral angeordnet, so dass sie in größtmöglichem Abstand zueinander auf dieser Scheibe 18 angeordnet sind.

Die Scheiben 18 bilden mit ihren Grundflächen in ihrer Gesamtheit einen Boden 26. Die Scheiben 18 und somit auch der Boden 26 sind in diesem Beispiel waagerecht und eben in Bezug auf eine aufgestellte Vorrichtung 10 entsprechend Fig. 1 ausgestaltet.

Ferner sind die Scheiben 18 drehbar um ihre jeweilige Mittelachse 28 auf einer jeweiligen Halterung 30 angeordnet. Diese Drehbarkeit ist in den Fig. 2 bis 4 durch die Pfeile 32 für eine Richtung exemplarisch angedeutet.

In der vorliegenden Ausführungsform stehen die Scheiben 18 über eine gemeinsame Steuerstange 34 in Wirkverbindung. Diese Steuerstange 34 wird durch einen Antrieb 36 bewegt, wodurch die entsprechende Verdrehung der Scheiben 18 erreicht und gesteuert werden kann.

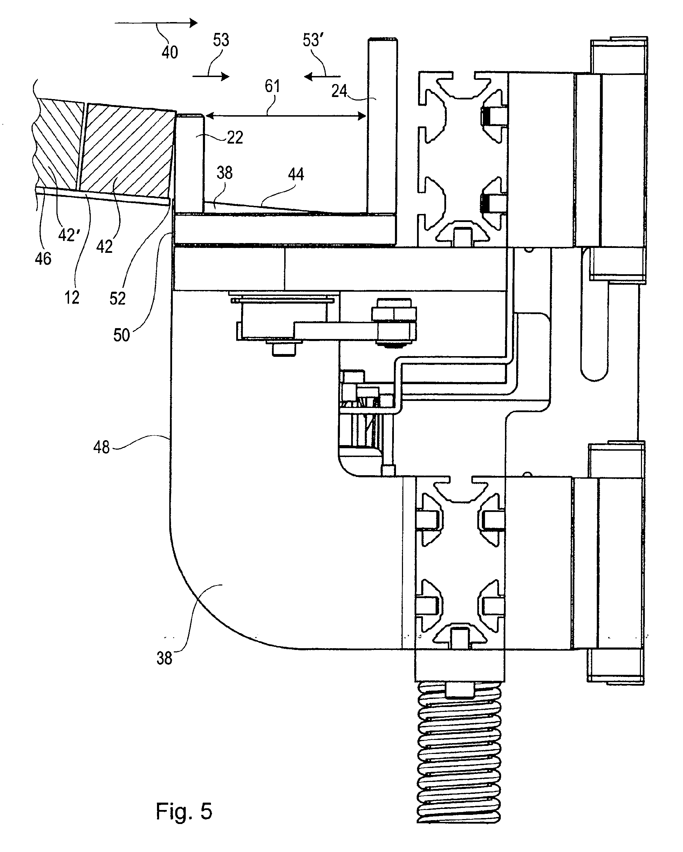

Neben ihrer Drehbarkeit sind die Scheiben 18 über ihre Halterung 30 ferner in ihrer Höhe bewegbar, wie später noch näher im Zusammenhang mit den Fig. 5 bis 9 erläutert wird.

In den Fig. 2 und 3 sind ferner Einleger 38 zu erkennen. Von diesen Einlegern 38 weist im vorliegenden Ausführungsbeispiel die Vorrichtung 10 fünf auf. Die Einleger 38 sind, wie in den Fig. 2 und 3 gut zu sehen ist, zwischen den Scheiben 18 angeordnet.

Die Einleger 38 sind dabei als plattenförmige Elemente ausgestaltet. Die Plattenebene erstreckt sich parallel zu einer Zuführrichtung der Werkstoffstangen 14. Diese Zuführrichtung ist in Fig. 5 beispielhaft durch den Pfeil 40 angedeutet.

Die Einleger 38 weisen im dargestellten Ausführungsbeispiel in Richtung der Zuführrichtung gesehen eine Breite von weniger als 5 cm, insbesondere weniger als 2 cm, auf. Dies gestattet es, dass auf ihnen angeordnete Werkstoffstangen, die aufgrund ihres Querschnittsprofils nicht rollen können, entlang der Einleger 38 gleiten können.

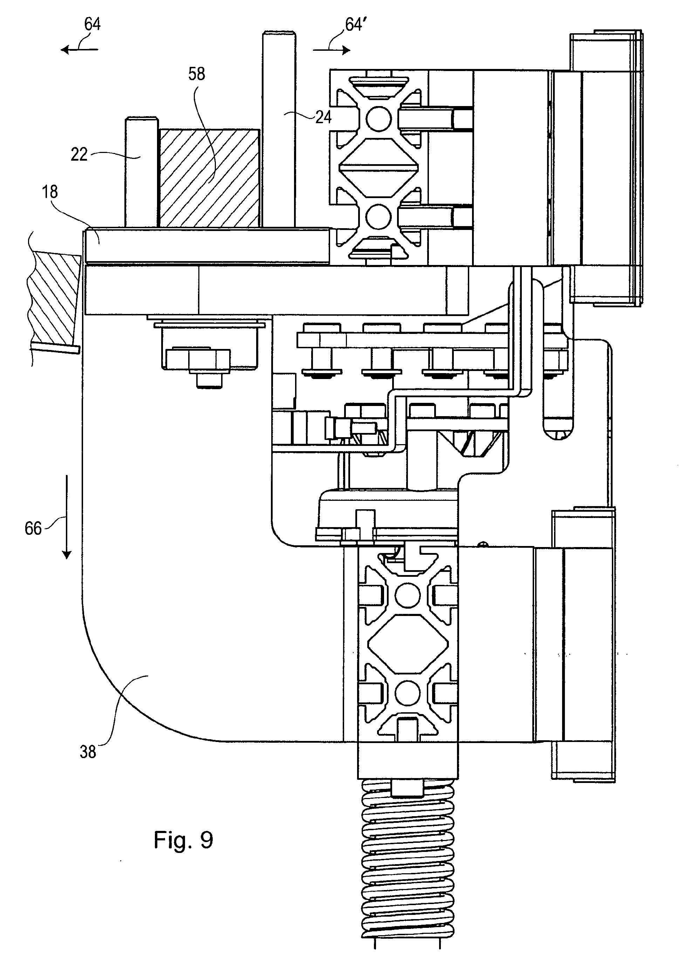

Wie insbesondere auch aus dem Zusammenhang der Fig. 5 und 9 im Folgenden hervorgeht, sind die Einleger 38 senkrecht zu der Zuführrichtung, dargestellt durch den Pfeil 40, bewegbar.

Im Zusammenhang mit den Fig. 5 bis 9 soll nun näher auf die Funktionsweise der erfindungsgemäßen Vorrichtung, insbesondere im Hinblick auf die Zusammenwirkung von Magazin 12 und Führung 16, und dabei auch auf das erfindungsgemäße Verfahren, eingegangen werden.

Fig. 5 zeigt eine Grundstellung, in der eine hier vierkantige Werkstoffstange 42 im Magazin 12 angeordnet ist und gegen den ersten Begrenzer 22 von außen gedrückt wird. Dieses Drücken geschieht in der Regel durch nachfolgende, gleiche Werkstoffstangen 42', die ebenfalls in dem zur Führung 16 hin geneigten Magazin 12 angeordnet sind und vorzugsweise durch einen separaten, hier nicht näher gezeigten Schieber innerhalb des Magazins 12 befördert werden.

Ferner ist in Fig. 5 zu sehen, dass der Einleger 38 eine in Richtung quer zur Zuführrichtung gesehen erkennbare Schräge 44 aufweist, die einer Schräge 46 des Magazins 12 entspricht. Einleger 38 und Scheibe 18 sind so gegenüber dem Magazin 12 in dem vorliegenden Beispiel angeordnet, dass ihre dem Magazin 12 zugewandten Seiten 48 und 50 nahezu an einer äußeren Kante 52 des Magazins 12 anliegen.

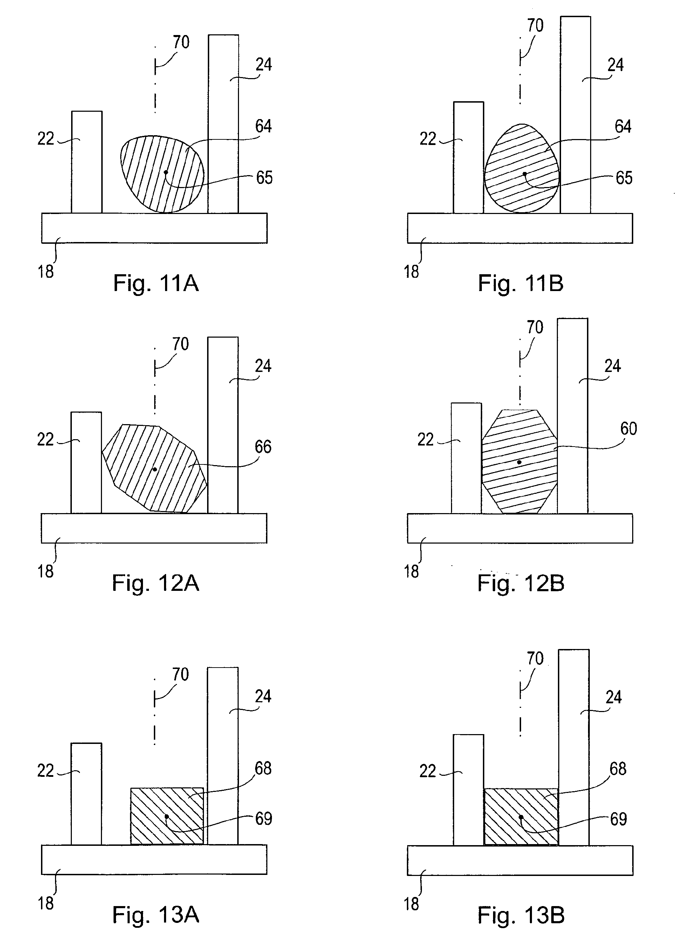

Um die Werkstoffstange 42, oder eine andere Werkstoffstange, wie z.B. Werkstoffstange 14 aus Fig. 1 oder die Werkstoffstangen von Fig. 11-13, in die Führung zu überbringen, wird zunächst der erste Begrenzer 22 weiter vom Magazin 12, bzw. dessen äußerer Kante 52, entfernt. Dies geschieht im vorliegenden Ausführungsbeispiel durch eine Drehbewegung der Scheibe 18 um ihre Mittelachse 28. Angedeutet ist dies durch einen Pfeil 53. Demgegenüber deutet Pfeil 53' die gleichzeitige synchrone Bewegung des zweiten Begrenzers 24 in die entgegengesetzte Richtung an.

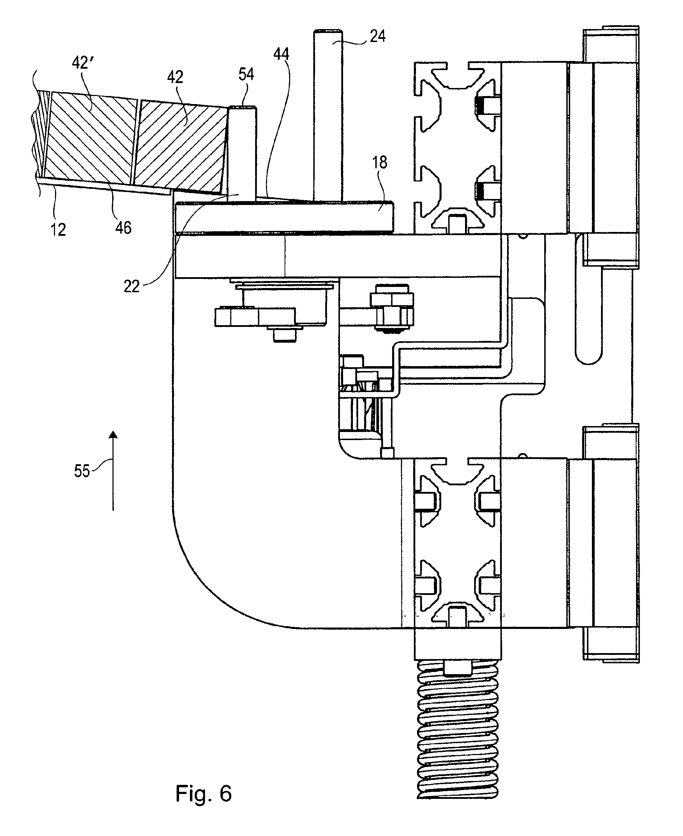

Durch diese Bewegung des ersten Begrenzers 22 ist es möglich, dass die Werkstoffstange 42 sich weiter in Zuführrichtung bewegt und dabei auf den Einleger 38 gelangt. Dieser Schritt, bzw. diese Drehbewegung der Scheibe 18, wird so lange durchgeführt, bis der Schwerpunkt der Werkstoffstange 42 über dem Einleger 38 angeordnet ist. Dieser Zustand ist in Fig. 6 dargestellt.

Ebenfalls ist in Fig. 6 zu erkennen, dass die Schrägen 44 und 46 so zueinander angeordnet sind, dass die Werkstoffstange 42 ohne die Gefahr eines Festhängens auf den Einleger 38 verschoben werden kann. Mit anderen Worten befindet sich die Schräge 44 in einer Flucht mit der Schräge 46.

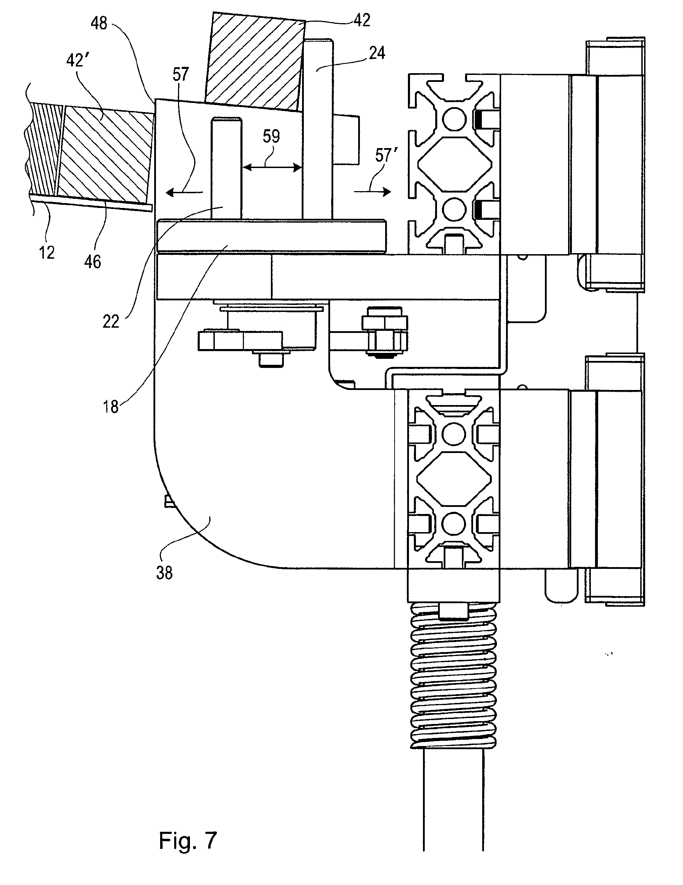

Im folgenden Schritt wird ausgehend von der Stellung der Elemente in Fig. 6 der Einleger 38 zunächst in eine senkrecht zur Zuführrichtung verlaufende Richtung in Bezug auf die Darstellung nach oben verfahren. Dies ist durch einen Pfeil 55 angedeutet. Dadurch wird die Werkstoffstange 42 in dieselbe Richtung angehoben und aufgrund der Schräge 44 des Einlegers 38 zunächst gegen den ersten Begrenzer 22 gedrückt. Dies jedoch nur so lange, bis die Höhe der Schräge 44 des Einlegers 38 das obere Ende 54 des ersten Begrenzers 22 übersteigt. Sobald dieser Zustand vorliegt, kann die Werkstoffstange 42 weiter entlang der Schräge 44 des Einlegers 38 entlang der Zuführrichtung gleiten, bzw. sich bewegen, bis sie auf den zweiten Begrenzer 24 trifft. Gleichzeitig wird die Bewegung des Einlegers 38 nach oben gestoppt. Dieser Zustand ist in Fig. 7 zu sehen. Bei Werkstoffstangen mit unrundem oder vieleckigem Querschnitt kann die Werkstoffstange mit unbestimmten Drehausrichtungen anliegen, wie das beispielsweise in Fig. 11-13 dargestellt ist.

Ferner ist hierin zu erkennen, dass die nachfolgende Werkstoffstange 42' auf der Schräge 46 des Magazins 12 nachgerutscht ist und nun gegen die Seite 48 des Einlegers 38 zu liegen kommt. Somit kann diese Werkstoffstange 42' nicht ohne Weiteres in die Führung 16 rutschen oder geschoben werden.

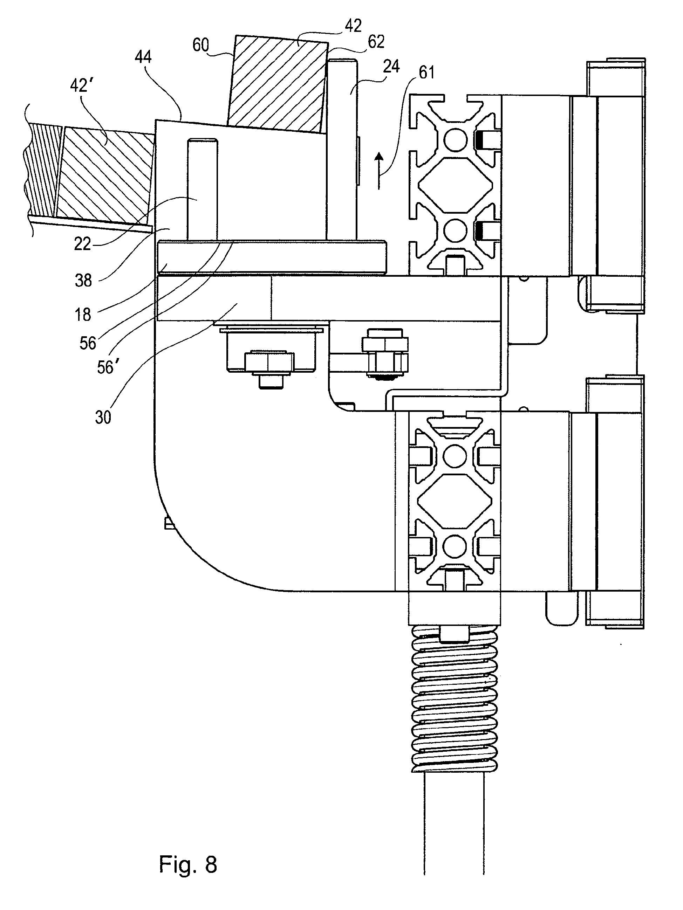

Als nächstes, gegebenenfalls auch gleichzeitig zu dem vorhergehend beschriebenen Schritt, wird die Scheibe 18 wieder so verdreht, dass die Begrenzer 22 und 24 in der in den Fig. 5 bis 9 gezeigten Darstellung weiter voneinander beabstandet werden. Dies ist durch Pfeile 57 und 57' angedeutet. Das geschieht zumindest so weit, bis der Abstand 59 zwischen erstem Begrenzer 22 und zweitem Begrenzer 24 zumindest der Breite der Werkstoffstange 42 entspricht. Dieser Zustand ist im Zusammenhang mit Fig. 8 gezeigt. In dieser ist außerdem zu erkennen, dass die Werkstoffstange 42 noch ein wenig weiter in Richtung der Zuführrichtung auf der Schräge 44 des Einlegers 38 gerutscht ist.

In einem weiteren Schritt wird nun die Halterung 30 und somit auch die Scheibe 18 entsprechend der Darstellung der Fig. 5 bis 9 nach oben, d.h. senkrecht zu der Zuführrichtung, verfahren, bis ein oberes Ende 56' der Grundebene 56 der Scheibe 18 den Einleger 38 übersteigt. Dadurch wird die Werkstoffstange 42 nun durch die Scheiben 18 aufgenommen. Diese Bewegung ist durch einen Pfeil 61 langedeutet.

Die Werkstoffstange 42 ruht nun auf der oberen Fläche 56 der Scheiben 18 und somit auf dem Boden 26. Auf diesem Boden 26 wird die Werkstoffstange 42 nun weiter in dieser Richtung nach oben verfahren, bis ihre Mittellängsachse 58 in Bezug auf die Höhe für das Zuführen zu der hier nicht näher gezeigten Werkzeugmaschine ausgerichtet ist.

Ferner wird die Scheibe 18 so verdreht, dass die Begrenzer 22 und 24 jeweils an Außenseiten 60 und 62 der Werkstoffstange 42 anliegen und diese mit ihrer Mittellängsachse 58 auf der Mittelachse 28 der Scheiben 18 ausrichten. Hierdurch wird von sich aus die Mittellängsachse 58 in Richtung der Zuführrichtung, d.h. in Bezug auf die Darstellung der Fig. 5 bis 9 in waagerechter Richtung, zum Zuführen für die hier nicht näher gezeigte Werkzeugmaschine ausgerichtet. Dieser Zustand ist in Fig. 9 dargestellt.

Hat die Werkstoffstange 64 ein unrundes Profil, wie das in Fig. 11A und 11B dargestellt ist, z.B. die eines Tropfens oder hat sie einen eiförmigen Querschnitt oder ist als Mehreck ausgebildet, wie das in Fig. 12A und 12B dargestellt ist, kann die Stange derart um deren Längsachse 65 verdreht auf der Scheibe 18 zum Liegen kommen, dass deren Mittellängsachse 65 nicht in der gewünschten Ausrichtung des Zentrums 70 der Führung liegt. Durch Anlegen der beiden Begrenzer 22 und 24 wird die Werkstoffstange 64 bzw. 66 je nach Geometrie verdreht und dabei so ausgerichtet, dass deren Mittellängsachse 65 im Zentrum 70 der Führung zum Liegen kommt.

In Fig. 13A und 13B ist dargestellt, wie eine Werkstoffstange 68 mit rechteckförmigem Querschnittsprofil mit deren Mittellängsachse 69 mittig zum Zentrum 70 der Führung die die synchrone Bewegung der Begrenzer 22 und 24 ausgerichtet wird.

Abschließend kann nach erfolgter Ausrichtung die Werkstoffstange 42 entsprechend bekannter Verfahren entlang ihrer Mittellängsachse 58 aus der Führung 16 in die nicht näher gezeigte Werkzeugmaschine exakt ausgerichtet überführt werden.

Danach werden entweder nacheinander, oder vorzugsweise auch gleichzeitig, die Scheiben 18 wieder so verdreht, dass entsprechend der Ansicht der Fig. 5 bis 9 die Begrenzer 22 und 24 wieder ihren maximalen Abstand 61 haben und außerdem die Scheibe 18 und der Einleger 38 nach unten verfahren. Dies ist durch Pfeile 64 und 64' sowie 66 angedeutet. Dadurch wird wieder die Grundeinstellung eingenommen, wie sie in Fig. 5 gezeigt ist.

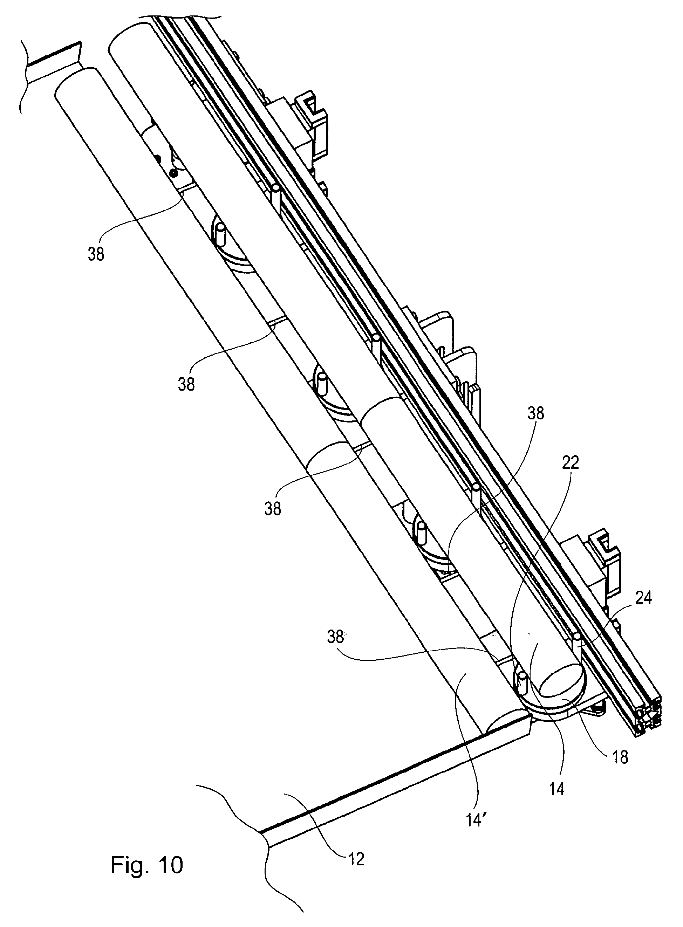

In Fig. 10 ist ebenfalls eine Endstellung vor dem Überführen der Werkstoffstange 42 bzw. 14 in die entsprechende Werkzeugmaschine für die runde Werkstoffstange 14 perspektivisch dargestellt.

Hier sieht man auch noch einmal gut, dass die Scheiben 18 nun, speziell im Vergleich mit der Fig. 2, entsprechend der Darstellung höher liegen und eine weitere Werkstoffstange 14' innerhalb des Magazins 12 gegen die Einleger 38 anliegt.

Im Vergleich von Fig. 9 und Fig. 10 sieht man ferner, dass die Begrenzer 22 und 24 in Fig. 10 in Bezug auf eine Betrachtung quer zur Zuführrichtung, also entlang der Mittellängsachse der Werkstoffstange 14, weiter auseinander liegen als die Begrenzer 22 und 24 in der Fig. 9. Hieran sieht man, dass die Begrenzer 22 und 24 sich somit an jede entsprechende Breite einer Werkstoffstange 14 bzw. 42 anpassen können und dadurch eine Ausrichtung der Werkstoffstange 14 bzw. 42 in einer Richtung entsprechend der Zuführrichtung erreichen. Des Weiteren zeigt dieser Vergleich auch, dass die entsprechend der Darstellung der Fig. 9 waagerechte Ausrichtung der Werkstoffstangen 14 bzw. 42 unabhängig vom Querschnittsprofil der jeweiligen Werkstoffstange 14, 42 ist. Hierzu trägt auch die runde Form der Bolzen 23 und 25 der Begrenzer 22 und 24 bei. Das liegt daran, dass der Kontakt zwischen Bolzen 23 und 25 und der entsprechenden Werkstoffstange 14 bzw. 42 unabhängig von der Verdrehposition der Scheiben 18 immer nur ein schmaler Bereich ist. Dies liegt daran, dass die Werkstoffstangen 14, 42 bei Kontakt stets tangential an diesen Bolzen 23 und 25 anliegen. Eine starke Reibung beim Verfahren der Werkstoffstange 14, 42 in die Werkzeugmaschine wird somit vermieden.

## Patentansprüche

1. Vorrichtung zum Zuführen von Werkstoffstangen (14, 42, 64, 66, 68) zu einer Werkzeugmaschine, mit einem Magazin (12) für die Werkstoffstangen (14, 42, 64, 66, 68), mit einer Führung (16) für die Werkstoffstangen (14, 42, 64, 66, 68) und mit zumindest einem Einleger (38) zum Überbringen und Einlegen einer Werkstoffstange (14, 42, 64, 66, 68) aus dem Magazin (12) in die Führung (16), wobei die Führung (16) zumindest ein Paar (20) von voneinander beabstandeten von einem Boden (26) hochstehenden Begrenzern (22, 24) aufweist, zwischen die die Werkstoffstange (14, 42, 64, 66, 68) auf den Boden (26) legbar ist, **dadurch gekennzeichnet, dass** ein in Zuführrichtung der Werkstoffstange (14, 42) gesehen hinterer, zweiter Begrenzer (24) des Paars (20), zumindest während des Überbringens der Werkstoffstange (14, 42, 64, 66, 68), höher als der erste Begrenzer (22) des Paars (20) ist, dass die Werkstoffstange (14, 42, 64, 66, 68) über den ersten, niedereren Begrenzer (22) hinweg zwischen die beiden Begrenzer (22, 24) des Paars (20) bringbar ist, und dass ein Abstand (59, 61) zwischen dem ersten und dem zweiten Begrenzer (22, 24) des Paars (20) synchron in einer Richtung, quer zur Zuführrichtung gesehen, derart veränderbar ist, dass die Begrenzer (22, 24) an zwei gegenüberliegende Auβenstellen der Werkstoffstange (14, 42, 64, 66, 68) anlegbar sind und diese dabei in eine stabile Drehstellung ausrichten, und zwar derart, dass die Werkstoffstangen (14, 42, 64, 66, 68) jeweils längs einer Mittellängslinie (70) der Führung (16) ausrichtbar sind.

2. Vorrichtung nach Anspruch 1, **dadurch gekennzeichnet, dass** der erste Begrenzer (22) des Paars (20), in Bezug auf das Magazin (12) gesehen, absenkbar ist.

3. Vorrichtung nach Anspruch 1 oder 2, **dadurch gekennzeichnet, dass** der zumindest eine Einleger (38), in Bezug auf das Magazin (12) gesehen, anhebbar ist.

4. Vorrichtung nach einem der Ansprüche 1 bis 3, **dadurch gekennzeichnet, dass** der Boden (26) in seiner Höhe gegenüber dem Magazin (12) veränderbar angeordnet ist.

5. Vorrichtung nach einem der Ansprüche 1 bis 4, **dadurch gekennzeichnet, dass** die Begrenzer (22, 24) senkrecht auf einer Grundebene (56) des Bodens (26) angeordnet sind.

6. Vorrichtung nach einem der Ansprüche 1 bis 5, **dadurch gekennzeichnet, dass** die Begrenzer (22, 24) in Form von Bolzen (23, 25) ausgebildet sind.

7. Vorrichtung nach einem der Ansprüche 1 bis 6, **dadurch gekennzeichnet, dass** die Führung (16) zumindest zwei erste und zumindest zwei zweite, voneinander axial beabstandete, Begrenzer (22, 24) aufweist.

8. Vorrichtung nach einem der Ansprüche 1 bis 7, **dadurch gekennzeichnet, dass** der Boden (26) zumindest zwei Bodenelemente aufweist, die jeweils einen ersten und zweiten Begrenzer (22, 24) aufweisen, wobei jedes Bodenelement um seine mittige Hochachse (28) drehbar ist.

9. Vorrichtung nach einem der Ansprüche 1 bis 7, **dadurch gekennzeichnet, dass** das Bodenelement als kreisförmige Scheibe (18) ausgebildet ist, von der ein Begrenzerpaar hochsteht.

10. Vorrichtung nach Anspruch 8 oder 9, **dadurch gekennzeichnet, dass** jeweils ein erster und ein zweiter Begrenzer (22, 24) diametral gegenüberliegend auf einem Bodenelement angeordnet sind.

11. Vorrichtung nach einem der Ansprüche 8 bis 10, **dadurch gekennzeichnet, dass** sie zumindest zwei Einleger (38) aufweist, die jeweils zwischen zwei Bodenelementen angeordnet sind.

12. Vorrichtung nach einem der Ansprüche 8 bis 11, **dadurch gekennzeichnet, dass** die Bodenelemente synchron drehbar gelagert sind.

13. Vorrichtung nach einem der Ansprüche 1 bis 12, **dadurch gekennzeichnet, dass** die hochstehenden Begrenzer (22, 24) um deren Hochachse drehbar sind.

## Claims

1. Device for feeding of material rods (14, 42, 64, 66, 68) to a machine tool, comprising a magazine (12) for the material rods (14, 42, 64, 66, 68), a guide (16) for the material rods (14, 42, 64, 66, 68) and at least one loader (38) for transferring and loading a material rod (14, 42, 64, 66, 68) from the magazine (12) into the guide (16), wherein the guide (16) has at least one pair (20) of spaced-apart limiters (22, 24) upstanding from a bottom (26) between which the material rod (14, 42, 64, 66, 68) can be placed on the bottom (26), **characterized in that** a rear, second limiter (24) of the pair (20), seen in a loading direction of the material rod (14, 42) is at least during loading the material rod (14, 42, 64, 66, 68) higher than the first limiter (22) of the pair (20), further **in that** the material rod (14, 42, 64, 66, 68) can be placed between the two limiters (22, 24) of the pair (20) across the first, lower limiter (22), and **in that** a distance (59, 61) between first and second limiter (22, 24) of the pair (20), seen in a direction crosswise to the loading direction can be changed synchronously in such a manner, that the limiters (22, 24) can abut against opposite outer points of the material rod (14, 42, 64, 66, 68), and align it thereby into a stable turning position, and in such a manner that the material rods (14, 42, 64, 66, 68) can be each aligned along a central longitudinal axis (70) of the guide (16).

2. Device of claim 1, **characterized in that** the first limiter (22) of the pair can be lowered with respect to the magazine (12).

3. Device of claims 1 or 2, **characterized in that** the at least one loader (38) can be lifted with respect to the magazine (12).

4. Device of any one of claims 1 to 3, **characterized in that** a height of the bottom (26) can be changed with respect to the magazine (12).

5. Device of any one of claims 1 through 4, **characterized in that** the limiters (22, 24) are arranged perpendicular on a base plane (56) of the bottom (26).

6. Device of any one of claims 1 through 5, **characterized in that** the limiters (22, 24) are designed as bolts (23, 25).

7. Device of any one of claims 1 through 6, **characterized in that** the guide (16) has at least two first and at least two second limiters (22, 24) which are axially spaced apart from one another.

8. Device of any one of claims 1 through 7, **characterized in that** the bottom (26) has at least two bottom elements, each of which has a first and a second limiter (22, 24), wherein each bottom element is rotatable about its central upstanding axis (28).

9. Device of any one of claims 1 through 7, **characterized in that** the bottom element is designed as a circular disc (18), from which a pair of limiters stands upwardly.

10. Device of claims 8 or 9, **characterized in that** a first and a second limiter (22, 24) are arranged diametrically opposite on a bottom element.

11. Device of any one of claims 8 through 10, **characterized in that** at least two loaders (38) are present, each of which is arranged between two bottom elements.

12. Device of any one of claims 8 through 11, **characterized in that** the bottom elements are mounted to turn synchronically.

13. Device of any one of claims 1 through 12, **characterized in that** the upstanding limiters (22, 24) are rotatable about its upstanding axis.

## Revendications

1. Dispositif pour apporter des tiges de matériau (14, 42, 64, 66, 68) à une machine-outil, avec un magasin (12) pour les tiges de matériau (14, 42, 64, 66, 68), avec un guide (16) pour les tiges de matériau (14, 42, 64, 66, 68) et avec au moins un chargeur (38) pour transférer une tige de matériau (14, 42, 64, 66, 68) du magasin (12) dans le guide (16) et la mettre en place dans ce dernier, sachant que le guide (16) présente au moins une paire (20) de limiteurs (22, 24) dressés à la verticale à distance l'un de l'autre à partir d'un fond (26), entre lesquels la tige de matériau (14, 42, 64, 66, 68) peut être posée sur le fond (26), **caractérisé en ce que** le second limiteur (24) ou limiteur arrière, considéré dans la direction d'alimentation de la tige de matériau (14, 42), de la paire (20) est, au moins pendant le transfert de la tige de matériau (14, 42, 64, 66, 68), plus haut que le premier limiteur (22) de la paire (20), **en ce que** la tige de matériau (14, 42, 64, 66, 68) peut être amenée, au-delà du premier limiteur (22), plus bas, entre les deux limiteurs (22, 24) de la paire (20), et **en ce qu'**une distance (59, 61) entre le premier et le second limiteurs (22, 24) de la paire (20) peut, de manière synchrone, être modifiée, considéré dans une direction transversale à la direction d'alimentation, de telle sorte que les limiteurs (22, 24) peuvent être appliqués contre deux points extérieurs opposés de la tige de matériau (14, 42, 64, 66, 68) et orientent ainsi celle-ci dans une position de rotation stable, et ce de telle sorte que les tiges de matériau (14, 42, 64, 66, 68) peuvent être respectivement orientées le long d'un axe médian longitudinal (70) du guide (16).

2. Dispositif selon la revendication 1, **caractérisé en ce que** le premier limiteur (22) de la paire (20) peut être abaissé, considéré par rapport au magasin (12).

3. Dispositif selon la revendication 1 ou 2, **caractérisé en ce que** le chargeur (38) au moins unique peut être relevé, considéré par rapport au magasin (12).

4. Dispositif selon l'une des revendications 1 à 3, **caractérisé en ce que** le fond (26) est disposé avec possibilité de modification de sa hauteur par rapport au magasin (12).

5. Dispositif selon l'une des revendications 1 à 4, **caractérisé en ce que** les limiteurs (22, 24) sont disposés perpendiculairement sur un plan de base (56) du fond (26).

6. Dispositif selon l'une des revendications 1 à 5, **caractérisé en ce que** les limiteurs (22, 24) sont réalisés sous la forme de goujons (23, 25).

7. Dispositif selon l'une des revendications 1 à 6, **caractérisé en ce que** le guide (16) présente au moins deux premiers et au moins deux seconds limiteurs (22, 24), axialement distants entre eux.

8. Dispositif selon l'une des revendications 1 à 7, **caractérisé en ce que** le fond (26) présente aux moins deux éléments de fond qui présentent chacun un premier et un second limiteurs (22, 24), chaque élément de fond étant rotatif autour de son axe médian vertical (28).

9. Dispositif selon l'une des revendications 1 à 7, **caractérisé en ce que** l'élément de fond est réalisé sous forme de disque circulaire (18), à partir duquel une paire de limiteurs se dresse à la verticale.

10. Dispositif selon la revendication 8 ou 9, **caractérisé en ce qu'**un premier et un second limiteurs (22, 24) sont chaque fois disposés sur un élément de fond en étant diamétralement opposés.

11. Dispositif selon l'une des revendications 8 à 10, **caractérisé en ce qu'**il présente au moins deux chargeurs (38), qui sont chacun disposés entre deux éléments de fond.

12. Dispositif selon l'une des revendications 8 à 11, **caractérisé en ce que** les éléments de fond sont montés à rotation synchrone.

13. Dispositif selon l'une des revendications 1 à 12, **caractérisé en ce que** les limiteurs (22, 24) dressés à la verticale sont rotatifs autour de leur axe vertical.
